# EUROPÄISCHE PATENTANMELDUNG

(11) **EP 3 211 138 A1**
(43) Veröffentlichungstag der Anmeldung: **30.08.2017**
(21) Anmeldenummer: 17157759.6
(22) Anmeldetag: 24.02.2017
(51) Int. Cl.: E02D 5/80, E04H 12/22, E04B 1/00, E04F 15/02

(54) **UNTERKONSTRUKTION FÜR EIN BAUWERK**

(30) Priorität: 24.02.2016 AT 501322016
(71) Anmelder: Priglinger, Josef, 4040 Linz (AT)
(72) Erfinder: Priglinger, Josef, 4040 Linz (AT)
(74) Vertreter: Burgstaller, Peter

(57) **Zusammenfassung**

Die Erfindung betrifft eine Unterkonstruktion für ein Bauwerk, welche eine in den Untergrund eingeschraubte Erdschraube (1) sowie ein Rahmenprofil (4) aufweist, wobei das Rahmenprofil (4) direkt mit einer oberen Platte (3) verbunden ist, welche mit der Erdschraube (1) lösbar verbunden ist.

Das Rahmenprofil (4) ist entlang der Führungsrichtung einer auf der oberen Platte (3) ausgebildeten Längsführung geführt bewegbar und an einer wählbaren Position entlang der Längsführung fixierbar. Eine untere Platte (2) ist an der Erdschraube (1) höheneinstellbar befestigt. Die obere Platte (3) ist entlang der Ebene der Auflagefläche (5) der unteren Platte (2) verschiebbar und an einer wählbaren Position in dieser Ebene an der unteren Platte (2) verschraubbar.

## Beschreibung

Die Erfindung betrifft eine Unterkonstruktion für ein Bauwerk, wobei die Unterkonstruktion einen Profilrahmen und Erdschrauben aufweist.

Bauwerke an denen erfindungsgemäße Unterkonstruktionen gut anwendbar sind, sind vor allem leichte Gebäude wie typischerweise Gartenhütten oder ein Geräteschuppen für Gartengeräte. Erdschrauben, auch als "in den Erdboden einschraubbare Haltevorrichtung", "Drehfundament", "Bodendübel", "Grundanker", "Bodenschraube" oder "Schraubfundament" bezeichnet, sind schlanke, gerade lange Metallteile, welche am Umfang aus Blech gebildete Schraubengewindegänge großer Breite aufweisen und durch Einstecken ihrer Spitze in Erde und darauffolgendes Drehen ihrer selbst um ihre Längsachse in Erdreich hinein schraubbar sind, so wie eine selbstbohrende Holzschraube in Holz. Erdschrauben sind beispielsweise in den Schriften DE 102008026215 A1, DE 19836370 C2, und GB 2424906 A gezeigt. Die Erdschraube gemäß der GB 2424906 A weist zusätzlich ein Innengewinde auf, in welche eine metallische Schraube von der oberen Stirnseite der Erdschraube her einschraubbar ist, sodass die Höhenlage von Aufbauten auf der Erdschraube damit fein einstellbar ist.

Die EP 1 105 598 B1 beschreibt eine Bauweise für ein Balkenfundament, welches als Rahmen aus mehreren horizontal angeordneten Holzbalken ausgebildet ist, die an der oberen Stirnseite von Erdschrauben aufliegen und mit dieser verbunden sind und wobei die Erdschrauben in das darunterliegende Erdreich eingeschraubt sind. Zur Verbindung zwischen einem Balken und einer Erdschraube wird ein Verbindungsteil, welcher mit einem oder mehreren Spießen von der Unterseite her am Balken steckt, von oben her in die oben als Rohr ausgebildete Erdschraube hineingesteckt und durch eine seitliche Schraube, welche durch den Mantel der Erdschraube verläuft fixiert. Die passende Position des Balkens gegenüber der Erdschraube ist durch das passende Positionieren des Verbindungsteils am Balken einzustellen. Es bedarf einer ausgeklügelten Vorgangsweise um den Rahmen exakt zu positionieren. Ein nachträgliches Verschieben des Verbindungsteils am Balken ist kaum möglich.

Die DE 202011050369 U1 beschreibt eine Bodenplatte, welche mit Hilfe von Erdnägeln oder Erdschrauben am Erdboden zu fixieren ist. Die Bodenplatte dient zum Fixieren einer Stange von einer Markise, eines Zeltes oder etwas Ähnlichem. An der Oberseite der Bodenplatte sind mehrere Schieberelemente geführt verschiebbar und wahlweise fixierbar. Mit Hilfe dieser Schieberelemente ist die Bodenplatte für wechselnde Stangen mit unterschiedlichen geometrischen Maßen anwendbar, ohne dass die Bodenplatte vom Untergrund gelöst werden muss.

Die der Erfindung zu Grunde liegende Aufgabe besteht darin, eine Rahmen und Erdschrauben aufweisende Unterkonstruktion für ein leichtes Gebäude, so auszubilden, dass sie an der Baustelle einfach und rasch zu montieren ist, und insbesondere auch für Laien auf diesem Gebiet gut einzurichten und gut zu nivellieren ist.

Zum Lösen der Aufgabe wird vorgeschlagen, Erdschraube und Rahmenelemente nicht direkt zu verbinden, sondern unter Zwischenlage einer unteren Platte und einer oberen Platte, wobei die untere Platte an der Erdschraube höheneinstellbar montierbar ist, die obere Platte gegenüber der unteren Platte in horizontaler Richtung verschiebbar ist und wahlweise fixierbar ist, und ein Längselement des Rahmens - also ein Balken oder ein Rahmenprofil - an der oberen Platte längsverschiebbar geführt bewegbar und wahlweise fixierbar ist.

Konkret wird eine Unterkonstruktion für ein Bauwerk gemäß Anspruch 1 vorgeschlagen, welche zumindest eine in den Untergrund eingeschraubte Erdschraube sowie ein Rahmenprofil aufweist, wobei das Rahmenprofil direkt mit einer oberen Platte verbunden ist, welche mit der Erdschraube über eine untere Platte lösbar verbunden ist,
- wobei das Rahmenprofil an der oberen Platte längsverschiebbar entlang der Führungsrichtung einer auf der oberen Platte ausgebildeten Längsführung geführt bewegbar und an einer wählbaren Position entlang der Längsführung fixierbar ist
- und wobei die untere Platte an der Erdschraube höheneinstellbar befestigt ist
- und wobei die obere Platte entlang der Ebene der Auflagefläche der unteren Platte verschiebbar ist und an einer wählbaren Position in dieser Ebene an der unteren Platte durch Schrauben fixierbar ist.

Die Erfindung wird an Hand von etwas stilisierten Zeichnungen zu einer beispielhaften erfindungsgemäßen Unterkonstruktion veranschaulicht:
- Fig. 1:: zeigt die für das Verständnis der Erfindung wesentlichen Teile in Explosionsdarstellung vertikal übereinander.
- Fig. 2:: zeigt die obere Platte 3 der Fig. 1 allein in Ansicht von oben.
- Fig. 3:: zeigt eine besonders bevorzugte untere Platte 2 in Ansicht von oben.
- Fig. 4:: zeigt eine besonders bevorzugte obere Platte 3 in perspektivischer Ansicht.
- Fig. 5:: zeigt die besonders bevorzugte untere Platte 2 der Fig. 2 in Seitenansicht und in seitlicher Schnittansicht.
- Fig. 6:: zeigt eine beispielhafte besonders bevorzugte erfindungsgemäße Unterkonstruktion im zusammengestellten Zustand.

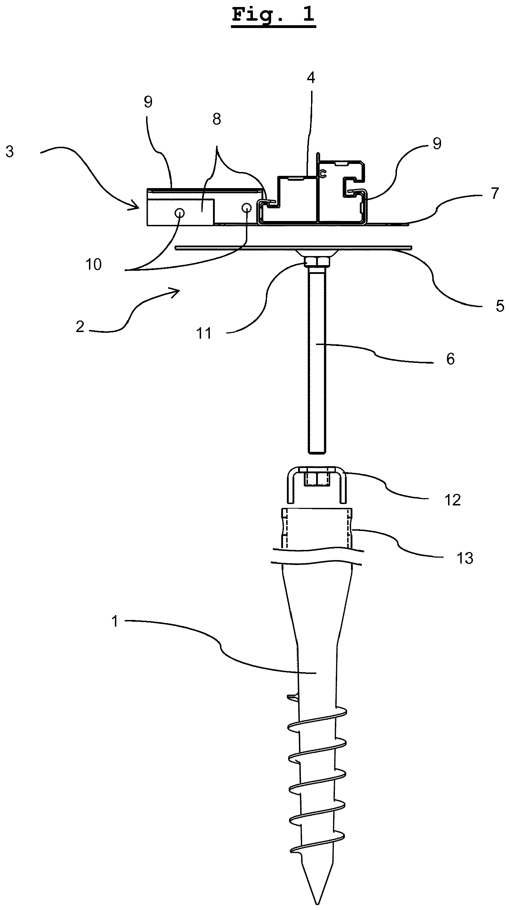

Fig. 1 zeigt in Reihenfolge von unten nach oben eine Erdschraube 1, eine untere Platte 2 und eine obere Platte 3. Nur eines von zwei an der oberen Platte 3 befestigbaren Rahmenprofilen 4 ist dargestellt. Typischerweise bestehen die Platten 2, 3 aus Metallblech. Das skizzierte Rahmenprofil 4 ist typischerweise ein Aluminiumstrangpressprofil. Die Erfindung ist aber ebenso anwendbar, wenn das Rahmenprofil 4 beispielsweise aus Holz besteht.

Die Erdschraube 1 wird bestimmungsgemäß an einer Stelle, an welcher ein Eckbereich eines aus Rahmenprofilen 4 zu bildenden Rahmens zu liegen kommen soll, senkrecht in den Untergrund, also die Erde geschraubt. An ihrer oberen Stirnseite ist die Erdschraube 1 mit einem axial zur Erdschraube verlaufenden Muttergewinde versehen.

Die untere Platte 2 besteht aus einer Auflagefläche 5 und einem Gewindebolzen 6 der von der Unterseite der Auflagefläche 5 nach unten weg steht und mit dem Muttergewinde in der Erdschraube 1 in Gewindeeingriff bringbar ist. Durch Einstellen der Einschraubtiefe des Gewindebolzens 6 in das Muttergewinde der Erdschraube 1 ist die Höhe der unteren Platte gegenüber der Erdschraube 1 fein einstellbar. Der Gewindebolzen 6 weist unterhalb der Auflagefläche 5 einen Eingriffsabschnitt 11 auf, beispielsweise in Form eines Sechskants an welchem ein Schraubenschlüssel ansetzbar ist. Der Gewindebolzen 6 ist mitsamt dem Eingriffsabschnitt 11 in der Auflagefläche 5 um seine eigene Achse rotierbar befestigt, sodass der Gewindebolzen 6 durch Manipulation am Eingriffsabschnitt 11 in der Erdschraube 1 vertikal verstellbar ist, auch wenn die untere Platte 2 und obere Platte 3 bereits miteinander verschraubt sind.

Es ist vorteilhaft das oben erwähnte Muttergewinde in der Erdschraube 1 nicht in einem monolithisch mit der Erdschraube 1 ausgebildeten Teil auszubilden, sondern in einem separaten Einsatzelement, welches in einem an der Stirnseite der Erdschraube 1 nach oben hin offenen Hohlraum angeordnet ist und gegenüber der Erdschraube 1 etwas verschwenkbar ist. Damit wird erreicht, dass die Auflagefläche 5 der unteren Platte 2 auch dann genau horizontal ausgerichtet werden kann, wenn die Erdschraube 1 nicht genau senkrecht ausgerichtet ist.

Beispielsweise kann dieses separate Einsatzelement ein abgekantetes Blechplättchen 12 sein, welches das Muttergewinde aufweist, beispielsweise in Form einer aufgeschweißten Mutter, in welches bestimmungsgemäß der Gewindebolzen 6 eingreift. An der Erdschraube 1 kann das abgekantete Blechplättchen 12 mittels Schrauben fixierbar sein, welche durch Öffnungen 13 in der Mantelfläche der Erdschraube 1 hindurch verlaufen. Indem diese Schrauben gelockert werden, ist das abgekantete Blechplättchen 12 ausreichend verschwenkbar, um den Gewindebolzen 6 auch dann senkrecht ausrichten zu können, wenn die Erdschraube 1 etwas aus der Senkrechten geneigt ist. Alternativ könnte das Muttergewinde in einer Durchgangsbohrung durch den Gelenkkopf eines Kugelgelenks vorliegen, welcher in einer Gelenkpfanne der Erdschraube 1 gehalten und bevorzugt durch Schrauben oder Hebel klemmbar ist. Im fertig montierten Zustand liegt die obere Platte 3 mit der Unterseite ihrer horizontalen Grundfläche 7 auf der Auflagefläche 5 der Platte 2 oben auf. Von der Grundfläche 7 ragen Aufkantungen 8, 9 nach oben hin empor. Eine Aufkantung 8 und eine Aufkantung 9 begrenzen gemeinsam einen länglichen Kanal, in welchen von der Stirnseite her ein Rahmenprofil 4 einschiebbar ist, und welches dann zwischen den beiden Aufkantungen 8, 9 in seiner Längsrichtung geführt bewegbar gehalten ist. Das Rahmenprofil 4 kann letztendlich an der oberen Platte 3 starr fixiert werden, indem selbstbohrende Schrauben durch Schraubendurchgangsbohrungen 10 der Aufkantungen 8, 9 hindurch in die Wand des Rahmenprofils 4 geschraubt werden. Jede Aufkantung 8, 9 weist ausgehend von der horizontalen Grundfläche 7 einen bevorzugt senkrecht nach oben verlaufenden Abschnitt auf, welcher am oberen Ende einen in Richtung des Rahmenprofils 4 vorspringenden Abschnitt aufweist, der eine obere Begrenzungsfläche der Aufkantung 8, 9 bildet.

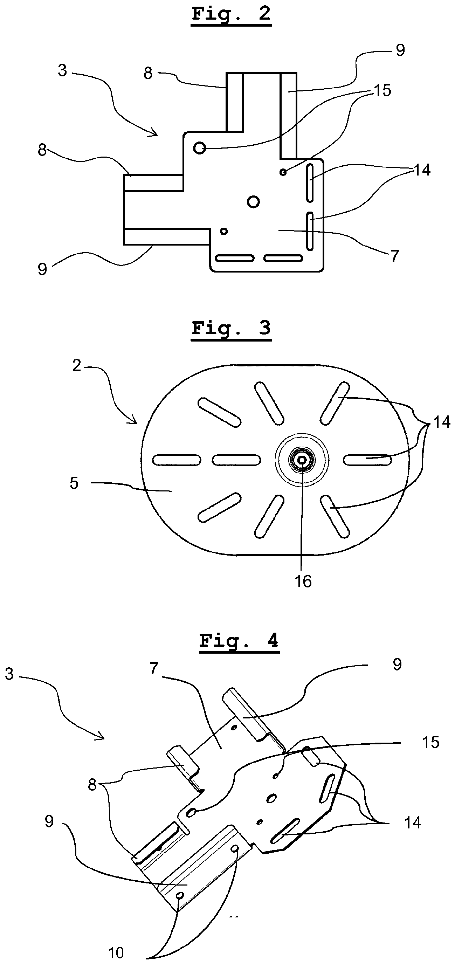

Wie an Hand von Fig. 2 und Fig. 3, bzw. Fig. 4 und Fig. 5 ersichtlich, sind die Grundfläche 7 der oberen Platte 3 und die Auflagefläche 5 der unteren Platte 2 durch zahlreiche Schlitze 14 und auch kreisrunde Bohrungen 15 durchlöchert. Für das Fixieren von unterer Platte 2 und oberer Platte 3 aneinander, werden diese beiden Teile, wenn sie aneinander anliegen, mittels Schrauben, welche durch Schlitze 14 und oder Bohrungen 15 in beiden Platten 3, 2 hindurch verlaufen, und zugehörigen Muttern aneinander gepresst. Durch die Vielzahl von Schlitzen 14 bzw. Bohrungen 15 ergeben sich, unabhängig davon wie die beiden Platten 2, 3 in horizontaler Richtung genau zueinander liegen, immer ausreichend viele Möglichkeiten an denen Schrauben, zwecks Fixierung der beiden Platten 2, 3 aneinander, durchsteckbar sind. An Hand von Fig. 2 und Fig. 4 ist gut erkennbar, dass die obere Platte 3 zwei Paare von Aufkantungen 8, 9 aufweist, wobei die durch jeweils ein Paar gebildete Führungsrichtung für ein Rahmenprofil 4 jeweils horizontal liegt, jedoch zwischen den beiden Paaren um 90° (um eine vertikale Achse) verdreht ist. Die obere Platte 3 eignet sich damit sehr gut um zwei Rahmenprofile 4, welche an einem Eckbereich des zu bildenden Rahmens aneinander stoßen, zu halten. Die Rahmenprofile 4 können dabei auch auf Gehrung geschnitten und aneinander gerückt sein.

Die in Fig. 2 und Fig. 4 dargestellten oberen Platten 3 weisen eine etwas unterschiedlich geformte Grundfläche 7 auf. Diese Formen und die Anordnungen der Bohrungen 15 und Schlitze 14 sind beispielhaft zu verstehen, sind also im Rahmen des fachmännischen Handelns abänderbar, wobei jedoch die in Fig. 4 abgebildete Grundfläche 7 die bevorzugte Variante darstellt.

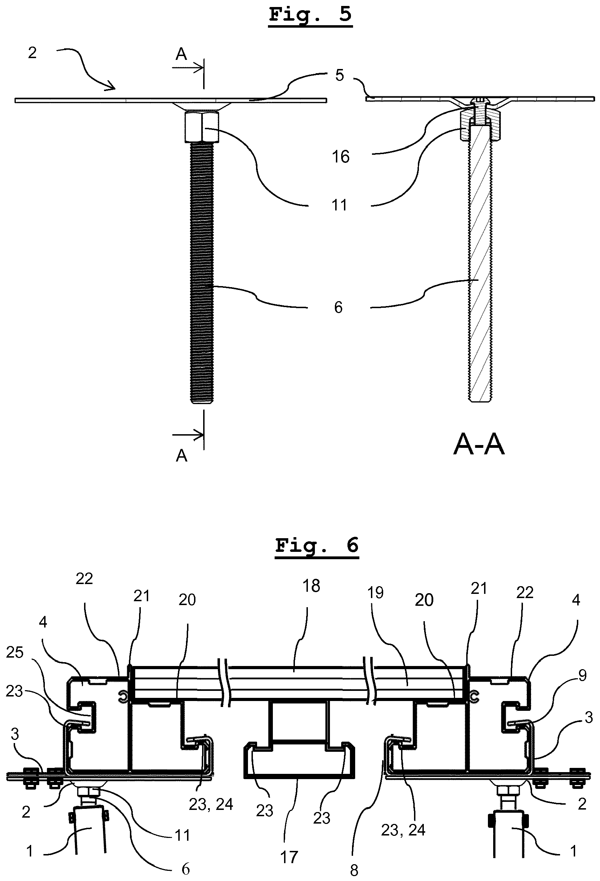

In den Fig. 3 und Fig. 5 ist eine besonders bevorzugte Variante der unteren Platte 2 dargestellt, wobei auch hier die dargestellte Form der Auflagefläche 5 und die Anordnung der Schlitze 14 zwar bevorzugt sind, aber im Rahmen des fachmännischen Handelns abänderbar sind.

Wie bereits zuvor erwähnt ist der Gewindebolzen 6 bevorzugt rotierbar in der Auflagefläche 5 gelagert. Dies erfolgt beispielsweise dadurch, dass dieser mit einer Nietverbindung (oder einer anderen geeigneten Verbindung, beispielsweise Pressverbindung) an der Auflagefläche 5 fixiert ist, sodass dieser einen Freiheitsgrad, zur Rotation um seine eigene Achse, aufweist. Bevorzugt erfolgt die Verbindung durch eine Schraubverbindung, indem eine Schraube 16 von oben durch eine Öffnung der unteren Platte 2 in den Gewindebolzen 6 eingeschraubt wird, wie in der Schnittansicht A-A der Fig. 5 erkennbar ist. Die untere Platte 2 wird dabei zwischen dem Kopf der Schraube 16 und einem Vorsprung des Gewindebolzens 6, bevorzugt dem Eingriffsabschnitt 11, fixiert. Die Schraube 16 verläuft mit Spiel durch die Öffnung der unteren Platte 2, sodass diese nach Verschrauben mit dem Gewindebolzen 6 in der unteren Platte 2 drehbar ist. Die Öffnung für die Schraube 16 befindet sich bevorzugt am Boden einer Vertiefung der Auflagefläche 5 der unteren Platte 2. Die Vertiefung in der Auflagefläche 5 ist derart ausgestaltet, bzw. liegt mit einer solchen Tiefe vor, dass der Kopf der Schraube 16 nicht über die Kontaktebene zwischen der oberen und unteren Platte 3, 2 ragt.

In Schnitt A-A der Fig. 5 ist zu erkennen, dass der Eingriffsabschnitt 11 bevorzugt als Sechskant ausgeführt ist. Der Eingriffsabschnitt 11 weist eine Öffnung auf, in die der Gewindebolzen 6 eingeschraubt oder eingepresst ist. Alternativ könnte der Eingriffsabschnitt 11 auch monolithisch, durch eine Schweißverbindung oder durch eine formschlüssige Verbindung mit dem Gewindebolzen 6 verbunden sein. Die Gewindebohrung für die Schraube 16 kann im Eingriffsabschnitt 11 oder im Gewindebolzen 6 vorliegen.

Besonders bevorzugt ist der Gewindebolzen 6 dreh und schwenkbar, also mit drei rotatorischen Freiheitsgraden und ohne translatorische Freiheitsgrade, an der Auflagefläche 5 fixiert, indem die Verbindung zwischen der unteren Platte 2 und dem Bolzen 6 als Kugelgelenk ausgeführt ist, wie in Fig. 5 dargestellt ist. Bevorzugt ist dazu die obere Fläche des Eingriffsabschnitts 11 nach außen gewölbt und somit als Gelenkkopf ausgeführt und die Vertiefung in der unteren Platte 2 als Gelenkpfanne ausgeführt, wie in der Schnittansicht A-A der Fig.5 dargestellt ist. Beispielsweise kann das Kugelgelenk arretierbar sein, beispielsweise mit einer Schraube oder einem Klemmhebel. Die Ausgestaltung der Schraub-, Klemm- bzw. Nietverbindung als Kugelgelenk, bzw. einer vergleichbaren Verbindung ohne translatorische Freiheitsgrade mit vorzugsweise drei rotatorischen Freiheitsgraden, hat den Vorteil, dass eine schräge Verankerung der Erdschraube 1 durch das Gelenk der unteren Platte 2 ausgeglichen wird. Bei dieser Ausgestaltung kann das abgekantete Blechplättchen 12 in der Erdschraube 1 entfallen, also der Gewindebolzen 6 direkt in eine konzentrisch im Körper der Erdschraube 1 verlaufende Gewindebohrung eingeschraubt werden.

Um wie zuvor beschrieben den Gewindebolzen 6 mit einem Freiheitsgrad rotierbar in der unteren Platte 2 zu lagern, müsste in Abwandlung der Fig. 5 der Kopf der Schraube 16 an seiner dem Eingriffsabschnitt 11 zugewandten Seite beispielsweise eine ebene Fläche aufweisen, sodass der dann beispielsweise ebenfalls ebene Boden der Vertiefung der unteren Platte 2 zwischen der Fläche des Kopfs 16 und einer beispielsweise ebenfalls ebenen Fläche des Eingriffsabschnitts 11 gehalten ist.

In Fig. 6 ist eine fertig zusammengesetzte erfindungsgemäße Unterkonstruktion für ein Bauwerk, beispielsweise eine Gartenhütte, einen Gerätehaus oder dergleichen, entlang einer Seitenkante des Bauwerks gezeigt, wobei das vordere Rahmenprofil 4 und das hintere Rahmenprofil 4, welche jeweils parallel zur Seitenkante verlaufen, nicht dargestellt sind. Die beiden dargestellten Rahmenprofile 4 bilden die seitliche Begrenzung des Rahmens der Unterkonstruktion. Die Rahmenprofile 4 sind jeweils an ihren Enden mit dem erfindungsgemäßen Erdverankerungssystem ausgestattet. Die Ausrichtung der Rahmenprofile 4 erfolgt dadurch, dass über die seitlichen Schrauben an der Erdschraube 1 das abgekantete Blechplättchen 12 ausgerichtet werden kann, sodass der Gewindebolzen 6 senkrecht steht und über die Einschraubtiefe des Gewindebolzens 6 die vertikale Position des Rahmenprofils 4 festlegbar ist. Beide genannten Ausrichtvorgänge können ausgeführt werden bevor oder nachdem die horizontale Position des Rahmenprofils 4, durch Verschiebung der oberen Platte 3 auf der unteren Platte 2 und anschließender Fixierung, vorgenommen wird. Die Fixierung der Platten 2, 3 erfolgt beispielsweise wie dargestellt durch je zwei Schrauben.

Der Rahmen ist beispielsweise insgesamt mit vier Erdschrauben 1 am Boden verankert. Natürlich könnten weitere erfindungsgemäße Erdverankerungssysteme an Punkten zwischen den Enden der Rahmenprofile 4 angeordnet sein, wenn diese eine gewisse Länge überschreiten, ein solches Erdverankerungssystem braucht dann nur ein Paar von Aufkantungen 8, 9 aufzuweisen. Alternativ oder zusätzlich kann vorgesehen sein, zwischen den Rahmenprofilen 4 Querverbinder 17 oder andere Streben und Versteifungselemente für den Rahmen vorzusehen. Die Querverbinder 17 können beispielsweise direkt an den Rahmenprofilen 4 befestigt werden, oder beispielsweise über obere Platten 3 die die Aufkantungen 8, 8 aufweisen, wobei auch diese wahlweise über untere Platten 2 mit einer Erdschraube 1 verankert werden können. Es sei klargestellt, dass der Rahmen der Unterkonstruktion nicht auf eine Rechteckform beschränkt ist, beispielsweise könnte sich der Grundriss des Rahmens auch aus mehreren unterschiedlich großen Rechtecken zusammensetzen, wobei jedes dieser Rechtecke vorteilhaft von Rahmenprofilen 4 und/oder Querverbindern 17 umschlossen sein kann und in jedem Eckbereich zwischen den einzelnen Rechtecken eine erfindungsgemäße Verankerung über eine Erdschraube 1 vorgenommen werden kann.

Auf die Rahmenprofile 4 und eventuell vorhandene Querverbinder 17 können in weiterer Folge Bodenplatten 18 aufgelegt werden, wobei diese bevorzugt Siebdruckplatten sind.

Die Länge jeder Bodenplatte 18 entspricht bevorzugt der inneren Seitenlänge des Rahmens, wobei entlang der anderen Seitenlänge mehrere Bodenplatten 18 aneinander liegen, sodass deren Breite insgesamt dieser anderen inneren Seitenlänge des Rahmens entspricht. Um die Bodenplatten 18 ineinander zu verankern sind diese bevorzugt entlang deren Längsseite mit einem Nut-FederSystem 19 versehen. Als innere Seitenlänge des Rahmens (bzw. des Gebäudes) ist der Abstand zwischen den Stegen 21 zweier gegenüberliegender Rahmenprofile 4 zu verstehen.

Die Rahmenprofile 4 weisen für die Bodenplatten 18 je eine Auflagefläche 20 auf, welche von der oberen Fläche 22 der Rahmenprofile 4 nach unten versetzt ist. Bevorzugt weisen die Rahmenprofile 4 einen Steg 21 auf, welcher zwischen der oberen Fläche 22 und der Auflagefläche 20 angeordnet ist und bevorzugt beide Flächen 20, 22 in vertikaler Richtung überragt, insbesondere die Auflagefläche 20 um mehr als die Dicke der Bodenplatten 18 überragt. Der Steg 21 ist bevorzugt in Form einer Trennwand nach unten verlängert, sodass dieser der Querschnitt des Rahmenprofils 4 in zwei Teileflächen teilt, wobei eine Teilfläche nach oben durch die oberen Fläche 22 begrenzt ist und die zweite Teilfläche nach oben durch die Auflagefläche 20 begrenzt ist. Vorteilhaft daran ist, dass das Rahmenprofil 4 dadurch einen sehr stabilen Aufbau aufweist, und sich die Gewichtskräfte des Bodens und der Wände des Gebäudes vorteilhaft auf die beiden Teilseiten des Rahmenprofils 4 verteilen.

Jedes Rahmenprofil 4 weist zudem einen äußeren und inneren Befestigungsvorsprung 23 auf, welche je entsprechend einer der Aufkantungen 8, 9 geformt sind, sodass das Rahmenprofil 4 zwischen ein Paar von Aufkantungen 8, 9 geschoben werden kann und in vertikaler Richtung durch diese fixiert ist. Die Befestigungsvorsprünge 23 können dadurch geformt sein, dass der Querschnitt des Rahmenprofils 4 eine Ausstülpung 24 aufweist, deren obere Begrenzungsfläche an der Unterseite der oberen Begrenzungsfläche der Aufkantung 8 anliegt. Die Befestigungsvorsprünge 23 können dadurch geformt sein, dass der Querschnitt des Rahmenprofils 4 eine Einstülpung 25 aufweist, deren untere Begrenzungsfläche an der Unterseite der oberen Begrenzungsfläche der Aufkantung 9 anliegt. Auch der Querverbinder 17 kann vorteilhaft Befestigungsvorsprünge 23 aufweisen, beispielsweise zwei Ausstülpungen 24, welche in einem Paar von Aufkantungen 8, 8 geführt und vertikal fixiert werden kann. Insbesondere bei den Querverbindern 17 kann es vorteilhaft sein, wenn die Aufkantungen 8, 8 elastisch verformbar sind, sodass die Querverbinder 17 von oben auf die Aufkantungen 8, 8 aufgesteckt werden können und nicht seitlich in diese eingeführt werden müssen.

## Patentansprüche

1. Unterkonstruktion für ein Bauwerk, welche eine in den Untergrund eingeschraubte Erdschraube (1) sowie ein Rahmenprofil (4) aufweist, wobei das Rahmenprofil (4) direkt mit einer oberen Platte (3) verbunden ist, welche mit der Erdschraube (1) über eine untere Platte (2) lösbar verbunden ist,
**dadurch gekennzeichnet, dass**
das Rahmenprofil (4) an der oberen Platte (3) längsverschiebbar entlang der Führungsrichtung einer auf der oberen Platte (3) ausgebildeten Längsführung geführt bewegbar und an einer wählbaren Position entlang der Längsführung fixierbar ist und dass die untere Platte (2) an der Erdschraube (1) höheneinstellbar befestigt ist und die obere Platte (3) entlang der Ebene der Auflagefläche (5) der unteren Platte (2) verschiebbar ist und an einer wählbaren Position in dieser Ebene an der unteren Platte (2) verschraubbar ist.

2. Unterkonstruktion nach Anspruch 1, **dadurch gekennzeichnet, dass** die untere Platte (2) eine horizontale Auflagefläche (5) und einen davon nach unten abstehenden Gewindebolzen (6) aufweist, welcher mit einer Muttergewindebohrung an der Erdschraube (1) in Eingriff ist.

3. Unterkonstruktion nach Anspruch 2, **dadurch gekennzeichnet, dass** der Gewindebolzen (6) mit der Auflagefläche (5) ein Gelenk bildet, welches keine translatorischen Freiheitsgrade und zumindest einen rotatorischen Freiheitsgrad, insbesondere drei rotatorische Freiheitsgrade, aufweist.

4. Unterkonstruktion nach einem der Ansprüche 2 oder 3, **dadurch gekennzeichnet, dass** das Muttergewinde in einem Einsatzelement ausgebildet ist, welches in einem an der oberen Stirnseite der Erdschraube (1) nach oben hin offenen Hohlraum angeordnet ist und gegenüber der Erdschraube (1) verschwenkbar ist.

5. Unterkonstruktion nach einem der Ansprüche 1 bis 4, **dadurch gekennzeichnet, dass** die obere Platte (3) eine horizontale Grundfläche (7) und davon nach oben empor ragende Aufkantungen (8, 9) aufweist, welche Führungsflächen der Längsführung für Bewegung des Rahmenprofils (4) in dessen Längsrichtung bilden und dass Schraubendurchgangsbohrungen (10) durch die Aufkantungen (8, 9) hindurch führen.

6. Unterkonstruktion nach einem der Ansprüche 1 bis 5 **dadurch gekennzeichnet, dass** die obere Platte (3) und die untere Platte (2) durch Schlitze (14) und/oder Bohrungen (15) in vertikaler Richtung durchbrochen sind, und dass Schrauben durch diese Durchbrüche an beiden Platten (2, 3) hindurch ragen.

7. Unterkonstruktion nach einem der Ansprüche 1 bis 6 **dadurch gekennzeichnet, dass** die obere Platte (3) zwei Paare von Aufkantungen (8, 9) aufweist, wobei die durch jeweils ein Paar von Aufkantungen (8, 9) gebildete Führungsrichtung für das Rahmenprofil (4) jeweils horizontal liegt, jedoch zwischen den beiden Paaren um 90° verdreht ist.

8. Unterkonstruktion nach einem der Ansprüche 1 bis 7, **dadurch gekennzeichnet, dass** das Rahmenprofil (4) einen durch eine Trennwand zweigeteilten Querschnitt aufweist, wobei der erste Abschnitt nach oben hin durch eine obere Fläche (22) begrenzt ist und der zweite Abschnitt nach oben hin durch eine Auflagefläche (20) für aufzulegende Bodenplatten (18) begrenzt ist.

9. Unterkonstruktion nach Anspruch 8, **dadurch gekennzeichnet, dass** die obere Fläche (22) und die Auflagefläche (20) durch einen Steg (21) getrennt sind, welcher beide Flächen überragt.

10. Unterkonstruktion nach einem der Ansprüche 8 bis 9, **dadurch gekennzeichnet, dass** das Rahmenprofil (4) zwei Befestigungsvorsprünge (23) aufweist, in Form von Ausstülpungen (24), deren obere Begrenzungsflächen an der Unterseite der oberen Begrenzungsfläche je einer der Aufkantungen (8, 9) anliegt und/oder Einstülpungen (25), deren untere Begrenzungsfläche an der Unterseite der oberen Begrenzungsfläche je einer der Aufkantungen (8, 9) anliegt.
